# EUROPEAN PATENT SPECIFICATION

(11) **EP 0 775 512 B1**
(45) Date of publication and mention of the grant of the patent: **16.10.2002**
(21) Application number: 96203281.9
(22) Date of filing: 22.11.1996
(51) Int. Cl.: B01D 24/24, E02D 3/10, E02B 11/00

(54) **Method for removing a liquid from a mixture**
Verfahren zum Entfernen einer Flüssigkeit aus einer Mischung
Procédé pour enlever un liquide d'un mélange

(30) Priority: 23.11.1995 NL 1001731
(43) Date of publication of application: 28.05.1997
(73) Proprietor: HOLLANDSCHE BETON GROEP N.V., 2280 AB Rijswijk (NL)
(72) Inventor: Kool, Anthonie Frederik, 4235 VW Tienhoven (NL); Van de Griendt, Michiel Adriaan, 2804 HP Gouda (NL); Slob, Simon Edward, 4205 LN Gorichem (NL); Lucieer, Willem Jan, 2253 EB Voorschoten (NL)
(74) Representative: de Bruijn, Leendert C.

(56) References cited:
- GB-A- 663 142
- PATENT ABSTRACTS OF JAPAN vol. 11, no. 34 (M-558) [2481] , 31 January 1987 & JP 61 204413 A (SHIGENORI KURIBAYASHI), 10 September 1986,

## Description

The invention relates to the removal of liquid from a mixture which also contains solid particles, such as minerals, and/or vegetable and/or animal particles. Such mixtures with a high liquid content occur when removing sediments from the bed of a body of water, for example in connection with cleaning or lowering the depth of said bed.

Especially in the case of polluted sediments, the removal thereof, as well as the subsequent storage, is associated with high costs, a large proportion of which are related to the large volume of mixture to be treated. Said volume is to an appreciable extent made up of water, especially in the case of sediments which contain particles of a size of less than 75 micrometres, which retain a large amount of water.

In this context it has already been proposed to reduce the volumes to be treated by removing liquid before proceeding with the treatment. With known methods to date a centrifuge or a filter belt press is used, for example. It is true that these methods are effective, but they incur high costs, if only because the installations required are complex. Further disadvantages are that variations in the composition of the mixture lead to problems.

Another major problem with the known technology is the production of an adequate vacuum in the mixture, with the result that compaction of the mixture frequently fails to meet the desired requirement. Experiments have shown that a gap in a cover sheet which has an area of a 10⁻⁷th of the covered area allows the absolute pressure in the mixture to rise from 0.4 bar to 0.6 bar. With the method according to British Patent GB 663 142 for the treatment of a soil layer a membrane is laid on the soil layer. Said membrane will have large numbers of small leaks at its edges, even if these edges are covered with rubble and/or a water-filled ditch, and will also leak through the soil, even under the water-filled ditch. The leaks at the edges will increase in size and number if the volume of the soil layer to be treated becomes smaller during treatment. Because of the leaks which always occur, absolute pressures of less than 0.8 bar in the mixture are not achievable with the method according to said British Patent GB 663 142. The absolute pressures are usually between 0.8 bar and the atmospheric pressure of 1 bar and frequently the pressure rapidly rises to just below atmospheric pressure, with the result that the method is very inefficient and the density currently required for the mixture to be treated cannot be achieved.

The aim of the invention is to provide a method with which liquid can be removed in a simple, inexpensive manner from diverse mixtures of varying composition, such that a solid "cake" can be obtained on which it is possible to walk and which is compact. Said aim is achieved by means of a method for the removal of liquid from a mixture of solid particulate matter and liquid, comprising the following steps: containment of the mixture inside an envelope which is impermeable or of low permeability and is at least partially supple, generation of a pressure difference over said envelope such that the pressure in the interior thereof is lower than that in the environment, and removal, from the envelope, of liquid which has separated off from the mixture as a consequence of the pressure difference, whereby the envelope completely surrounds the mixture.

The important feature of the method according to the invention is that the envelope is both liquid-tight and gas-tight, such that it is possible to generate the pressure difference necessary for displacement of the liquid.

The envelope can comprise a sheet which is laid with folds. The sheet can then follow the mixture in the desired manner without the production of tensile stresses which would lead to the sheet giving way. As a supplementary safety measure, it would be possible in this context to use a sheet reinforced with carbon, aramide, polyethene or glass fibres or fabrics.

To keep the costs of transport from the extraction site to the final depot as low as possible, it is preferable that the installation for the method is situated as close as possible to the extraction sites for the mixture to be treated.

The envelope can be filled with mixture in various ways, such as by mechanical means with the aid of known excavating equipment and known transportable, optionally tippable, buckets. Filling can also be carried out by hydraulic means, such as using known suction dredgers and conveyor pipes. The mixture can be introduced in a specific layer thickness to obtain optimum production. Said optimum production is highly dependent on, inter alia, the number of suction points for removal of the liquid. With suction from below and above, a layer thickness of 0.60 metre resulted in optimum treatment in the case of soil sediment sludge.

Once the mixture has been adequately treated, the removal of liquid and gas by suction is stopped and the uppermost part, frequently a sheet or nonwoven, of the envelope is removed, after which the excavating equipment, for example a mechanical shovel, digs out the mixture cake and loads it into open transport trucks. The mixture is then frequently of a nature such that no liquid is able to drain out of the mixture under the influence of gravity, which means that the loading platforms of the transport trucks do not have to be liquid-tight. The transport trucks take their load to a final depot.

As well as for mixtures of sediments from underwater beds, the method can also be used for mixtures such as sewage sludge, blast furnace lime slag and certain residual products from industrial processes consisting of liquids containing an appreciable proportion of fine solid and/or sparingly soluble particles. An example of a residual product of this type is the thickened slurry of soil and sugar beet particles produced when washing sugar beet, which operation precedes sugar production.

Another example is the liquid residual product from zinc ore which remains after zinc production by the electrolysis process. This residual product contains jarosite and beaverite together with sulphuric acid. Liquid-rich solutions of calcium compounds and metal hydroxides can also be treated by the method. Another example is the treatment of leather sludge, a residual product from leather manufacture.

The method according to the invention is also suitable for in situ treatment of bed material, in which case the envelope comprises a soil layer impermeable to liquid. An impermeable soil layer of this type can be obtained, for example, by injecting waterglass, grout, wax, cement, lime, gypsum, bentonite, or mixtures thereof. Bed material can then, for example, be understood to be a soil layer or a mixture of soil in a deposit and the abovementioned residual products from industrial processes, which products are likewise in a deposit.

Preferably, the soil layer has a Darcy constant of permeability which is between k = 10⁻⁶ and k = 10⁻¹⁰ metres per second.

It is also possible to insert a retaining wall closed on all sides, such as a metal or plastic dam wall or a plastic sheeting wall or a bentonite or bentonite-cement wall with or without a dam wall or sheeting wall, into the layer which is impermeable to liquid and to cover that part of the soil which is located within the retaining wall with a supple envelope section which is joined to the retaining wall.

After removing a large proportion of the liquid, at least the supple envelope section can be removed and the remaining, particulate material can be excavated together with material containing residual liquid.

Preferably, a suction element connected to a vacuum source is fitted in the envelope. Pressure means, such as a layer of liquid or a pressure plate and/or a gas or liquid pressure generated by an external pumping installation, can also be arranged on the outside of the envelope.

To increase the speed of liquid withdrawal, certain quantities of polyelectrolytes can be added to the mixture beforehand, as a result of which it is possible to remove the immobile and the free water and any other liquids from the mixture as far as possible. To enable the action of the polyelectrolytes to be optimum, it can be necessary to add additional water or liquid to the mixture beforehand, before the polyelectrolytes are added.

In this way it is also possible in the case of polluted mixtures to remove pollutants from the mixture to the maximum possible extent, as a result of which it is possible that the finished mixture cake, after treatment, can warrant a lower class in the environmental classification system, which has the additional advantage that dumping costs are lower.

In this context, for example, 0.1 - 20.0 kg polyelectrolyte per 1,000 kg solids can be introduced into the envelope; preferably 0.2 - 8.0 kg polyelectrolyte per 1,000 kg solids are introduced.

Figures 1a - d show an example of a method for removing liquid from a mixture, such as soil with a high water content.

Figure 2a shows the mixture in a pit, dug on land;

Figure 2b shows the mixture in a pit, dug in the underwater bed;

Figure 2c shows the basin as a permanent construction,

Figure 2d shows the mixture in a mobile tank.

Figures 3a, b show variants of liquid withdrawal from a mixture, in situ, an injected bottom containment having been made in Figure 3a and a lateral containment of the area where liquid removal is to be carried out having been made in Figure 3b.

Figures 4a, b show a variant with which the mixture has been introduced into a sheeting envelope and said envelope is located in a tank construction, with additional pressure being applied by plates on the top of the sheeting envelope in Figure 4a and by a gastight closeable cover in Figure 4b, an additional gas pressure (left-hand part of the figure) or an additional liquid pressure (right-hand part of the figure) being produced.

Figure 5 shows, diagrammatically, a method and an installation for supplying polyelectrolytes to the mixture to be treated.

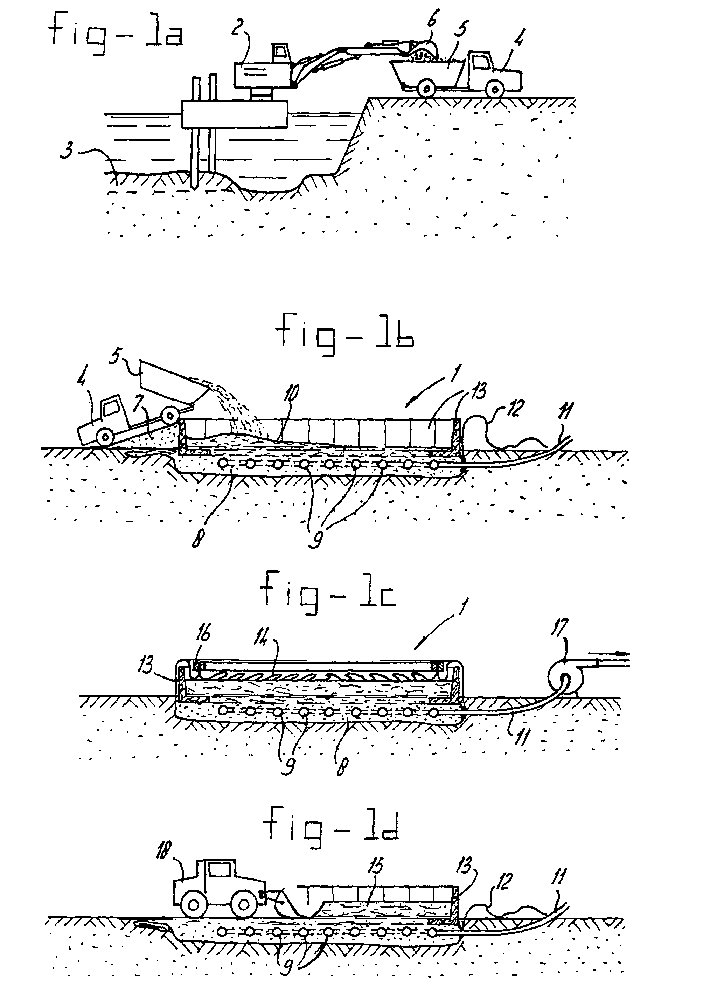

In Figure 1a soil which is difficult to dewater is excavated from the underwater bed 3 with the aid of the floating excavating installation 2, which soil, if appropriate after allowing surplus water to drain off rapidly from the excavator bucket 6, is dumped into the loading platform 5 of the vehicle 4. Once loading platform 5 is fully loaded, vehicle 4 is driven to the treatment installation 1 (see Figure 1b). Vehicle 4 is reversed up a temporary slope 7 to bring loading platform 5 to an adequate height for dumping, after which the soil is dumped from loading platform 5 into the installation 1. Vehicle 4 is then driven back to excavating installation 2 to fetch a new load for filling installation 1, etc.

Installation 1 can be filled in various ways, depending on the distance from the installation to the excavated soil or dredged soil. For instance, the installation can be filled directly with the aid of a crane installation. It is also possible for the crane or dredging installation first to dump the soil into barges, after which the filled barges sail to the treatment installation, after which the soil is transferred from the barges into installation 1 using a crane installation or something similar. Said transport of soil can also be effected using known combined suction and delivery installations and conveyor pipes.

Mixture 10, which in this case is soil from underwater bed 3, is dumped up to a certain height and preferably such that as much liquid as possible per unit treatment time is removed from a maximum amount of soil.

As is indicated in Figure 1b, treatment installation 1 can consist of an excavated shallow pit in which a coherent bottom sheet 12 is laid. With this arrangement, bottom sheet 12 has dimensions larger than the pit dimensions.

A layer of readily permeable soil, soil layer 8, preferably sand, is introduced into the pit and a drainage system of pipes 9 is laid, which pipes open into one or more discharge lines 11. For this illustrative embodiment the drainage system is laid just below ground level and the first layer of sand reaches to the bottom of the L-shaped prefabricated wall elements 13, which have to be put into place.

Preferably, the top of the first layer of sand is at the same level as the top of the horizontal arm of the L-shaped wall element 13. Wall elements 13, for example prefabricated concrete elements, are laid alongside and abutting one another around the edge of the pit on the first layer of sand, the horizontal arm of the wall element facing inwards. After the wall elements have been put into place, a second shallow layer of sand is then introduced, during which operation, for example, the horizontal arms of the wall elements are covered with a few centimetres of sand.

After the mixture 10 has been dumped to a certain depth on top of the second layer of sand, a coherent sheet with a very large number of folds, top sheet 14, is laid on top of the mixture. The folds are such that the sheet can very easily become longer in two perpendicular directions, without the production of any tensile forces worthy of note in the sheet itself, as a result of which the sheet will also not tear as the volume of the mixture 10 being treated becomes smaller.

To remove liquid even more rapidly from the mixture 10, it is also possible to lay one or more known drainage mats on top of the mixture 10 before top sheet 14 is laid. In this case top sheet 14 is laid on top of said drainage mats.

Bottom sheet 12 is then brought around and over the wall elements 13 and laid over the top of the mixture 10 to allow a great deal of space, that is to say is laid with numerous folds, and is joined to top sheet 14 with the aid of clamping device 16, so that it is as far as possible gastight and liquid-tight.

Clamping device 16 is of a nature such that it is easily able to move with the movement of the thickening mixture 10. Preferably, said clamping device is made from materials which are light in weight and is also such that it does not damage the sheet. In this situation the mixture 10 is surrounded by a liquid-tight and gastight envelope; see Figure 1c. Discharge line 11, which has a gastight and liquid-tight passage in bottom sheet 12, is then connected to pumping device 17. Pumping device 17 sucks up liquid and gas from the envelope inside the bottom and the top sheet, as a result of which a vacuum is created inside said envelope, and liquid and any gas are removed from the mixture 10 via the sand layer, drainage pipes 9 and discharge pipe 11.

The liquid from pumping device 17 can be discharged into a sewer system, a watercourse or lake or into the sea, but can also first be fed through a treatment installation, in which the liquid and any gas present are treated, before the treated liquid is discharged and any gas which has been treated is discharged into the atmosphere.

Removal of liquid is stopped after the percentage of liquid has reached between 30 and 85 % of the volume of the residual mixture composition, preferably when the percentage of liquid is between 45 and 70 %. Mixture 10 has then become mixture cake 15, on which it is possible to walk and which has become what is known as compact. Compact denotes that the cake, which in this case can also be designated ground, is easy to dig out with a spade.

Clamping device 16 and top sheet 14 and any drainage mats are then removed from the top of mixture cake 15. Bottom sheet 12 is laid on the ground alongside the pit. This is shown in Figure 1d. Part of the wall, formed by wall elements 13, is temporarily removed at one side. At this location bottom sheet 12 is temporarily buried below ground level or covered with protective plates over which an excavator is able to be driven without damaging bottom sheet 12. The mixture cake is then, for example, dug out using an excavator 18 equipped with a mechanical shovel. The mixture cake which has been dug out is placed in a depot or brought to said depot via a transport vehicle. It is known that the removal of a few centimetres off the top of the second sand layer when digging out ensures that all of the mixture cake is dug out. That part of the top of the second sand layer into which particles of the mixture cake have penetrated is then also removed, with the result that the top of the sand filter is substantially cleaned.

The wall elements 13 which have been temporarily removed are replaced and a fresh thin sand layer is laid on the original second sand layer, so that the original depth is obtained again. The installation is then once again ready to receive dumped mixture 10 and the situation shown in Figure 1b is restored.

The installation is used repeatedly and the life of the bottom sheet 12 must therefore be equal to the life of the installation. Bottom sheet 12 can consist of plastic sheeting, which can consist of sheets welded to one another. The thickness of the sheet is between 0.5 and 4 millimetres, preferably between 1 and 3 millimetres. The sheet can be reinforced with fibres or fabrics made of glass and/or metal and/or plastic, in which context the plastics can be carbon, aramide, nylon, polyethene or polypropylene. Mixtures of varieties of fibres or fabrics are also possible. The material used for the bottom sheet is preferably PE, HDPE, PVDM or PVC.

The top sheet can be used once and can consist of known plastic sheeting with a thickness of between 0.25 and 1.5 millimetres, preferably between 0.4 and 1.0 millimetre.

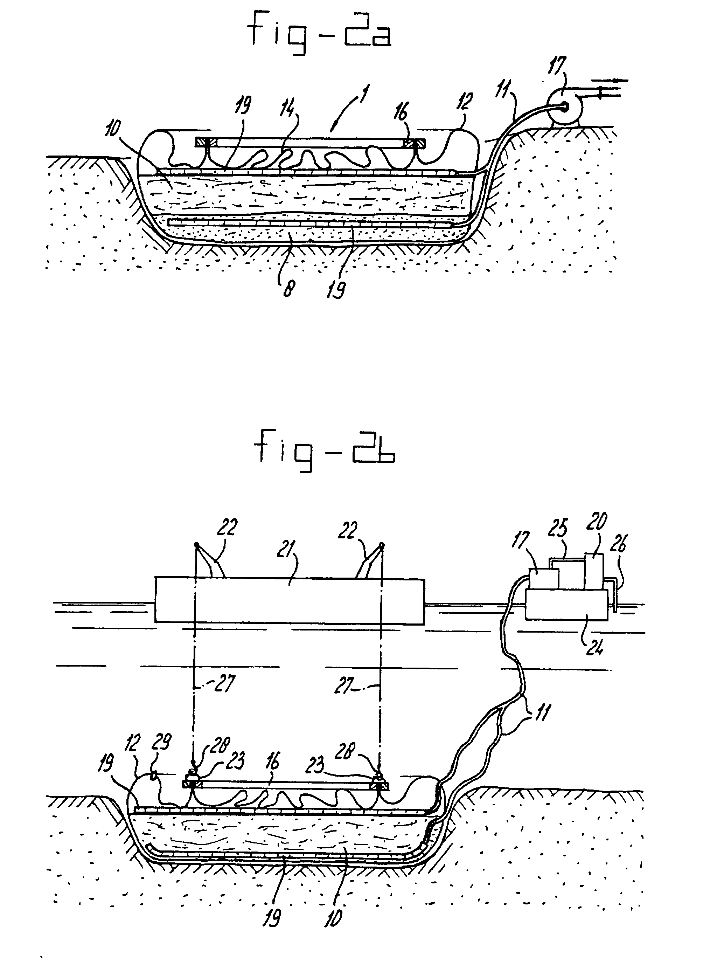

In Figures 2a and 2b the walls of the excavated pit form the lateral limits of the installation. Figure 2a shows a pit which has been made on land and Figure 2b a pit which has been made in an underwater bed.

In Figure 2a, a layer of soil 8, which provides drainage and in which one or more drainage mats 19 are located, has been laid beforehand beneath the mixture 10 which is introduced. One or more drainage mats 19 are laid on top of the mixture. The drainage mats are connected to pumping device 17 by means of discharge pipe 11.

In Figure 2b the dumped mixture 10 lies directly on top of a drainage mat 19. The discharge pipes 11, which are fed through a gastight and liquid-tight opening in the bottom sheet 12 and/or the top sheet 14, are laid over the length with a great deal of room and mounted so that said discharge pipes 11 are very easily able to move with bottom sheet 12 or top sheet 14.

Discharge pipes 11 lead to a pumping device installed on a barge 24. A treatment installation 20, which treats liquid and gas originating from the mixture 10, can also be located on said barge. The treated liquid can then be discharged through discharge pipe 26. In this variant bottom sheet 12 and top sheet 14 can be fixed to one another above water level with the aid of clamping device 16, after which the clamping device is let down onto the bed with the aid of hoisting gear 22, mounted on a working ship 21. In this case the hoisting lines 27 are connected by their respective hoisting hooks 28 to lifting brackets 23, which are secured to the clamping device 16.

Using the reverse procedure, the clamping device 16 can be raised above water, together with the sheets, after treatment of the mixture 10. To this end it is necessary for one or more valves or vents 29 to be incorporated in the uppermost section of bottom sheet 12 and/or in the top sheet 14, which valves or vents are, in that situation, opened from above water level using known means, as a result of which water is able to flow from outside the sheeting envelope into the sheeting envelope.

Without said valves or vents 29, a diver will have to detach part or small sections of the clamping device 16 in order to allow water into the envelope, by which means it also becomes possible to raise clamping device 16, together with the top sheet 14 and part of the bottom sheet 12, above water level. Above water level, top sheet 14 and clamping device 16 can be removed and bottom sheet 12 laid open. It is then possible to dig out mixture 10, which has become mixture cake 15, which digging operation can be carried out in a conditioned or unconditioned manner. Conditioned digging denotes, for example, digging using a bucket which can be closed off underwater so as not to admit any water from the environment.

As far as barge 24 is concerned, it is, of course, also possible for pumping device 17 and treatment installation 20 to be located on working ship 21, in which case said barge 24 is not needed.

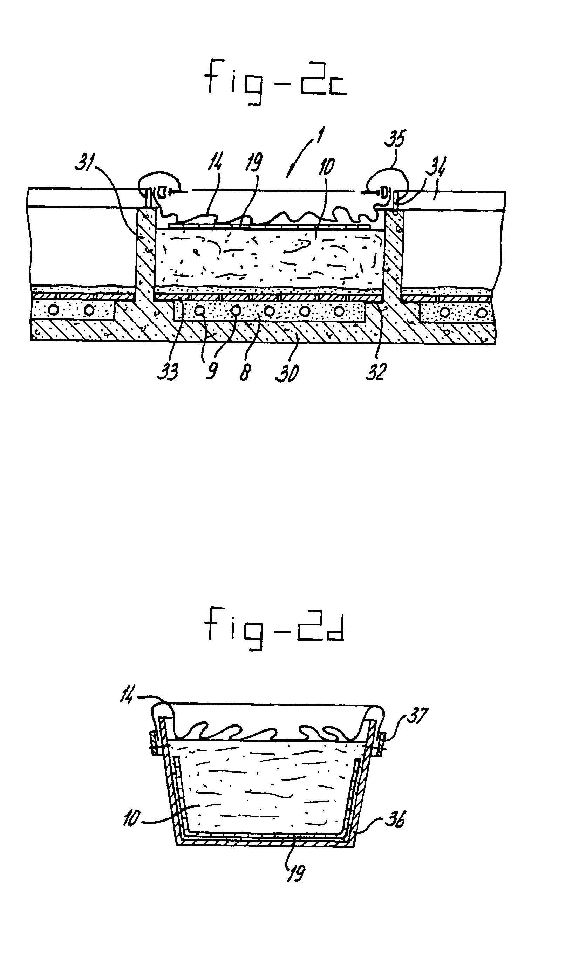

Figure 2c shows a diagrammatic cross-section of treatment installation 1, which here consists of a permanent construction, the lower section of the envelope for the mixture 10 consisting of, for example, a concrete floor construction 30 with upright walls 31. A layer of soil 8, providing drainage, is made on floor construction 30 by laying a first layer of sand in which drainage pipes 9 are laid, which pipes are connected to a pumping device 17. Floor gratings 33 are laid on said first layer of sand, the ends of said gratings also resting on the continuous edge 32 of wall 31. A second shallow layer of sand is laid on said gratings 33 and in the holes in the gratings; something similar to what has been described for Figure 1. Mixture 10 is introduced on top of soil layer 8, one or more optional drainage mats 19 being laid on top of said mixture 10. The drainage liquid is discharged via drainage mats 19, via lines 11 and via one or more other pumping devices 17.

The top of the envelope around the mixture is then closed off with a top sheet 14, which is laid in numerous folds, the envelope being clamped firmly, so that it is gastight and liquid-tight, to clamping rim 34 by means of clamping device 35. Clamping rim 34 is anchored in wall 31.

The mixture can be dug out after treatment, in virtually the same way as in the case of Figure 1, that portion of the second layer of sand which is on top of the gratings being removed with the cake. After digging out, a further thin layer of sand can be laid on the gratings, so that the installation is once again ready to receive mixture.

Figure 2d shows a variant, which consists of a mobile tank 36, such as a metal container, in which drainage mats have been laid on the base and side walls before mixture 10 is introduced. After mixture 10 has been dumped into the tank, a drainage mat can also be laid on the top. This has not been drawn in the figure. Tank 36 is then closed off with top sheet 14, which is laid on the mixture with numerous folds and with the edge of top sheet 14 being wrapped over the edge of tank 36, allowing a great deal of room, and being clamped firmly, such that it is gastight and liquid-tight, to tank 36 by means of clamping devices 37.

During treatment of the mixture, liquid and any gas are removed from the mixture and discharged via drainage mats 19, discharge pipe 11 and pumping device 17. After treatment, said tank 36 can be taken as a container by a transport vehicle to a depot, where the container can be emptied and used again.

It is possible for drainage mat 19 to be temporarily attached to the walls and the base of tank 36, that is to say attached for several treatment cycles of successive loads of a mixture 10, by which means said drainage mat can be used several times.

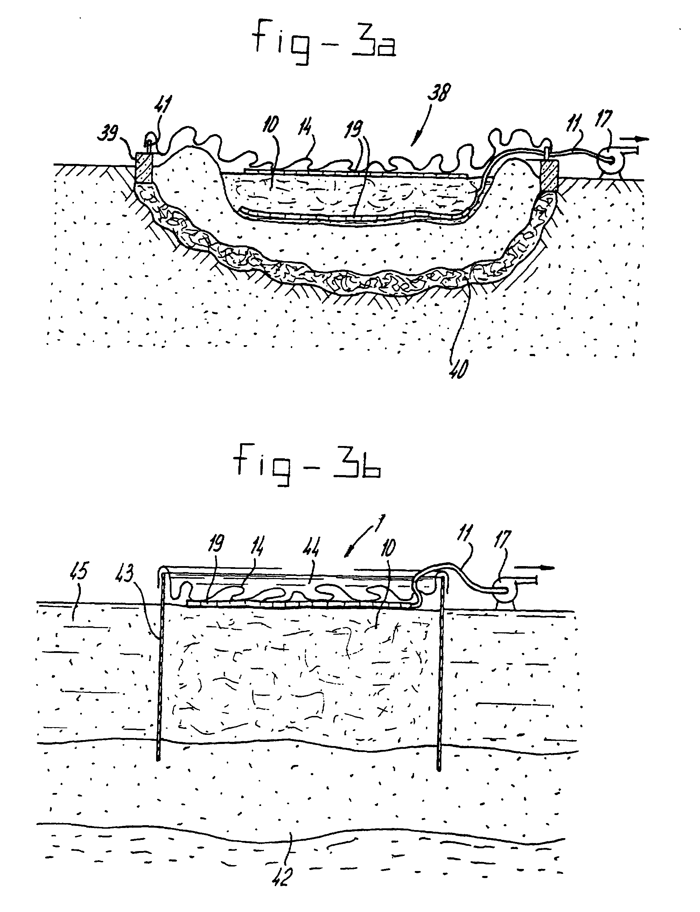

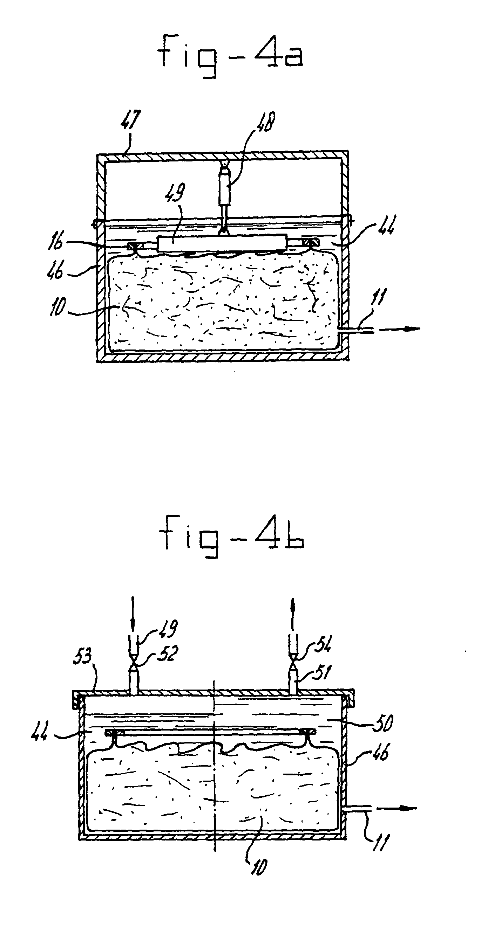

Figure 3a shows, for example, an existing pond or waste dump 38 which is to be treated, during which treatment mixture 10 is thickened so that it can be transported or in order to create more space in the depot. Since the bottom of said pond or waste dump can permit the passage of too much groundwater, with the result that the thickening process fails or proceeds poorly, a liquid-tight layer is introduced beneath said pond or waste dump. Said liquid-tight layer can be a layer injected from above or a layer injected using the directional drilling method, in which case injection takes place via the bit. The material injected into the soil can be waterglass, grout, wax, cement, lime, gypsum, bentonite or mixtures thereof, and acts as a binder.

A wall 39, for example made of concrete, is then erected close to ground level, which wall is poured such that it abuts the injected layer 40. A continuous clamping rim 41 is anchored to the top of said wall 39.

One or more drainage mats 19 are laid on the bed of the pond or waste dump 38 by submersion, if the mixture 10 is sufficiently flowable to allow this. Said drainage mats can be made such that they are permeable to liquid and/or gas only on the side in contact with the mixture 10.

Similar drainage mats 19 are laid on the top. The liquid and/or the gas can be removed from the mixture via drainage mats 19, discharge pipes 11 and pumping device 17 in the abovementioned manner and can then be treated in a treatment installation or discharged in the abovementioned manner. Discharge pipe 11 can in this case be fed through a liquid-tight and/or gastight passage.

After laying the drainage mats on the top of the mixture 10, top sheet 14 is laid, in numerous ample folds, over the mixture, the edges of the top sheet being clamped liquid-tight and gastight to the clamping rim 41. When thickening of mixture 10 to form a mixture cake is adequate, treatment is stopped and top sheet 14 is removed, together with the upper drainage mats 19. The pond or waste dump can then be used again because filling capacity has been recreated, or the mixture cake can be dug out and transported elsewhere for storage or further treatment.

In said latter case, the bottom drainage mats 19 can also be removed and in the case of a waste dump said dump can be completely re-used.

If the layer of soil beneath the pond is adequately liquid-tight and gastight, it is not necessary to introduce the injected layer 40. However, in this case the bottom of the walls 39 must reach to below the lowest expected groundwater level, to prevent ingress of air into the treatment chamber via the underside of walls 39. In this example, wall 39 is made of stone-like material which is adequately liquid-tight and gastight, but said walls can also be made of metal and/or plastic, in accordance with known techniques, or of cement/bentonite combinations.

Figure 3b shows a variant of a soil layer 45 of thin to very thin consistency, which contains a high to very high percentage volume of water, such as in a boggy area. Said layer must be thickened and is located above a barrier layer 42, such as clay. Vertical retaining walls 43 are installed around the area to be treated, specifically such that their bottom end extends sufficiently into the barrier layer 42 and the top end protrudes above the top of the layer of soil to be treated. That part of the soil layer 45 which is to be treated and is located inside the retaining walls 43 is now mixture 10. One or more drainage mats 19 are now arranged on top of the mixture and top sheet 14 is arranged, with numerous large folds, on top of said drainage mats. The edges of top sheet 14 are fixed liquid-tight and gastight to retaining walls 43. The thickening treatment is then started, during which treatment liquid and gas are removed from the mixture via drainage mats, discharge pipe 11 and pumping device 17. A layer of water 44 can also be placed on top of top sheet 14 to achieve top loading and to guarantee greater gastightness of the top sheet, for example in the case where the top sheet has tears or holes because of possible damage or poor welding.

The layer of water can also be introduced in order to prevent damage, such as holes caused by birds pecking, or tears, in the top sheet 14 or bottom sheet 12, because said layer of water will prevent any animals and people who are unaware from walking on the sheet, which is undesirable.

If it is difficult to walk or drive on the top of soil layer 45, it is possible, for example, to use amphibious vehicles or a working ship to install the retaining walls and to carry the pumping device 17.

After treatment and removal of the layer of water 44 and top sheet 14 with drainage mats 19, retaining walls 43 can also be removed, as a result of which, depending on the groundwater level, the space within retaining walls 43 will fill with water and a subsequent section of soil layer 45 can be treated.

If soil layer 45 is completely underwater, treatment can also be carried out in the same way. It is then no longer necessary to introduce an additional layer of water on top of top sheet 14. In this case the installation and removal of the treatment installation 1 is carried out using one or more working ships.

Figure 4 shows variants for the treatment of a mixture in a tank-shaped construction 46. The drainage means, such as drainage mats and pipes, have not been drawn, but said means are connected to one or more discharge pipes 11. The mixture 10 is located inside an envelope made up of bottom sheet 12 and top sheet 14, which are fixed to one another with the aid of a clamping device 16. The envelope is contained completely within the tank-shaped construction 46.

External pressure can be applied to the envelope to accelerate the removal of liquid from the mixture 10.

Figure 4a shows, in addition to the introduction of a layer of water, one or more plates 49 on the outside of top sheet 14.

An external force is applied to the envelope with the aid of a hydraulic or pneumatic cylinder-piston installation 48, which is hingeably attached between plate 49 and supporting construction 47. Supporting construction 47 is joined to tank construction 46 during the treatment of mixture 10.

Figure 4b shows a variant in which the top of the tank construction 46 is closed off liquid-tight and gastight by lid construction 53 during treatment of mixture 10. The left-hand part of the figure shows a feed 49 for, for example, a gas, preferably air, with a shut-off valve 52. A layer of water 44 has once again been introduced on top of the envelope. By applying a gas pressure via feed 49 above the layer of water 44, an additional pressure, which can be controlled externally, is exerted on the envelope during the treatment.

In the right-hand part of Figure 4b the space above the envelope in which the mixture 10 is located is completely filled with liquid 50, such as water. Liquid 50 can then be supplied through feed 49 and venting can be carried out via discharge 51 with the aid of shut-off valve 54. In this case the external pressure on the envelope can be controlled in an optimum manner by hydraulic means, as a result of which optimum withdrawal of liquid from the mixture is able to take place.

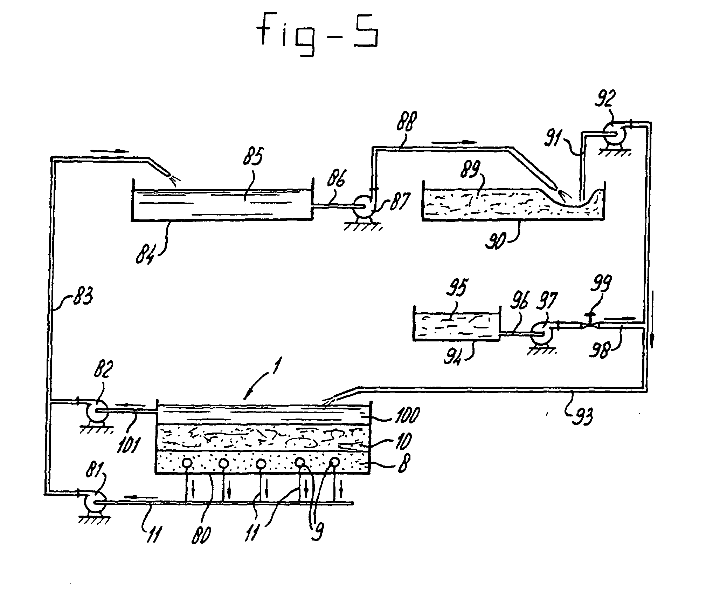

Figure 5 shows a diagrammatic representation of a process and installation for adding agents, so-called polyelectrolytes, to remove appreciably more liquid from a mixture 10 than is possible without said agents. One example of this is soil which is very rich in water and contains numerous fine particles of both inorganic and organic origin which are able to bind a large amount of water, inter alia as a result of the dipolar character of the water molecules. The bound water can, as is known, be divided into three types, namely water of crystallisation, immobile water and free water. Water of crystallisation comprises the bound water molecules which can be removed only by heating soil, preferably dry soil, preferably at a temperature higher than 50 °C. Only all the free water, or a very substantial proportion thereof, and a large proportion of the immobile water can be removed by the removal of liquid from a mixture 10 according to the invention. If there are very small solid particles in the mixture 10 and no polyelectrolytes are added, virtually only a substantial proportion of the free water can be removed.

A polyelectrolyte ensures that, in the case of soil containing water as the liquid, the bond between one or more polar water molecules and a solid particle is broken, a polyelectrolyte ion replacing the water molecule. As a result a large amount of immobile water is released and it is also possible that several small solid particles agglomerate, or flocculate, to form larger particles or to form flocs, as a result of which said particles will also settle more rapidly. Some of the free water which has been trapped by the solid particles with their immobile water can also then be released.

If a polyelectrolyte to be added is to function well, it is necessary that the liquid content of the mixture to be treated is very high. In the case of water, the percentage volume of liquid must be greater than 85 %, or the percentage volume of solids must be less than 15 %, preferably less than 10 %.

To this end, mixtures which are treated must also be diluted with a liquid. The dilution can be effected by adding a highly dilute solution of one or more polyelectrolytes, which are mixed well with the mixture by stirring vigorously. It is also possible gradually to dilute the mixture by pumping the mixture around an installation, liquid being added during circulation. A solution of a polyelectrolyte in concentrated form is added during the long period in which the mixture from the initial stage, which becomes increasingly more dilute, is circulated by pumping. After a specific circulation time, the entire dilute mixture, insofar as this is possible, is transferred to the treatment installation. Very frequently water is used as the liquid for dilution of the mixture.

Figure 5 shows yet a further variant for adding polyelectrolytes before removal of liquid from the mixture is started.

Before the mixture, for example water-rich soil, is introduced into the treatment installation 1, it is first, possibly in partially dewatered form, introduced into a temporary depot or a tank 90 as depot soil 89.

Tank 90 can also be the well of a barge or dredger. If depot soil 89 is now to be treated, said soil is brought into solution or further diluted by means of water 85, from tank 84, which water is sprayed, via line 86, pump 87 and line 88, onto the depot soil, after which said dilute depot soil is fed, via line 91, pump 92 and line 93, to tank 80 of the treatment installation 1. A solution of one or more polyelectrolytes is supplied, in metered form, in line 93 during said hydraulic transport. To this end a solution 95 of one or more polyelectrolytes is pumped from tank 94 via line 96, pump 97 and line 98 into line 93. By means of shut-off valve 99 in line 98 it is possible to control the required metering.

Tank 80 contains a liquid-permeable layer of soil 8, such as sand, on the base. A drainage system of drainage pipes 9 is arranged in layer 8, which pipes are connected to discharge pipes 11, which are able to remove the drained liquid from tank 80 via pump 81.

The dilute depot soil 89 flows from line 93 into tank 80, where it undergoes partial demixing, depending on the requisite settling speed of the solid particles. Mixture 10, with, on top of it, an aqueous layer 100 consisting predominantly of water, is then produced on top of soil layer 8. Said aqueous layer is pumped off at the top of tank 80 via pump 82 and line 101 and said water is returned to tank 84 by pumping via line 83.

The removal of water from mixture 10 can already be started while filling tank 80 with the dilute depot soil 89. Said water can then also be returned via drainage pipes 9, discharge lines 11, pump 81 and line 83, into tank 84.

After all the depot soil 89 has been transported to treatment installation 1, treatment to remove water in accordance with the method described above can be carried out after shutting off line 101. During this operation the line from pump 81 can be connected to a discharge point or can be connected via a treatment installation to said discharge point.

The quantity of polyelectrolyte to be added depends on several factors, such as, for example, the fineness of the solid particles and the type of material of which they consist. The quantity which has to be added is between 0.1 and 20 kg polyelectrolyte in dry form per 1,000 kg solids in a mixture and preferably said quantity is between 0.2 and 8 kg per 1,000 kg solids.

## Claims

1. Method for the removal of liquid from a mixture (10) of solid particulate matter and liquid, comprising the following steps: containment of the mixture (10) inside an envelope (12, 14, 30, 31, 36, 39, 40) which is impermeable or of low permeability to gas and/or liquid and is at least partially supple, generation of a pressure difference over said envelope (12, 14, 30, 31, 36, 39, 40) such that the pressure in the interior thereof is lower than that in the environment, and removal, from the envelope (12, 14, 30, 31, 36, 39, 40, 42, 43), of liquid which has separated off from the mixture (10) as a consequence of the pressure difference ; **characterised in that** the envelope completely surrounds the mixture.

2. Method according to Claim 1, wherein the envelope comprises a sheet (12, 14).

3. Method according to Claim 1 or 2, for in situ treatment of soil material and/or dumped material, wherein the envelope comprises a soil layer (40, 42) impermeable to liquid.

4. Method according to Claim 1 or 2, for in situ treatment of soil material and/or dumped material, wherein the envelope comprises a soil layer (40, 42) which is of low permeability or impermeable to liquid, the permeability to liquid of which has a Darcy constant of permeability which is between k = 10⁻⁶ and k = 10⁻¹⁰ metres per second.

5. Method according to Claim 3 or 4, wherein the impermeable soil layer (40, 42) is obtained by injecting a binder, such as waterglass, grout, wax, cement, lime, gypsum, bentonite or mixtures thereof.

6. Method according to Claim 3 or 4, wherein a retaining wall (43) closed on all sides is inserted into the layer (42) impermeable to liquid and that portion of the soil located within the retaining wall is covered with a supple envelope section (14) which is joined to the retaining wall (43).

7. Method according to Claim 1 or 2, wherein, following the removal of liquid, on reaching a liquid percentage of between 30 and 85 percent of the volume of the residual material, at least the supple envelope section (14) is removed and the residual material, comprising material in the form of solid particles and liquid, is excavated.

8. Method according to Claim 7, wherein the percentage volume of the liquid component of the residual material is between 45 and 70 % of the volume of the residual material.

9. Method according to one of the preceding claims, wherein a suction element (11) connected to a vacuum source is fitted in the envelope.

10. Method according to one of the preceding claims, wherein pressure means, such as a layer (44) of liquid and/or a pressure plate (49), and/or a gas or liquid pressure generated by an external pumping installation, are applied to the exterior of the envelope (12, 14, 30, 31, 36, 39, 40).

11. Method according to one of the preceding claims, wherein 0.1 - 20.0 kg polyelectrolyte per 1,000 kg solids are added to the mixture (10).

12. Method according to Claim 10, wherein 0.2 - 8.0 kg dry electrolyte per 1,000 kg solids are added.

13. Method according to one of the preceding claims, wherein the mixture (10) is enclosed by the envelope, which is oversized, with the formation of folds in the envelope, such that the envelope is able to adapt to movements in the mixture, which movements result from the removal of liquid from the mixture.

14. Method according to one of the preceding claims, wherein a vacuum is generated in the envelope, the absolute value of which vacuum is in the range from 0.7 to 0.2 bar.

## Patentansprüche

1. Verfahren zur Entfernung von Flüssigkeit aus einer Mischung (10) aus festem teilchenförmigen Material und Flüssigkeit, welches die folgenden Schritte umfaßt: Einschluß der Mischung (10) in einer Umhüllung (12, 14, 30, 31, 36, 39, 40), die undurchlässig oder von geringer Durchlässigkeit für Gas und/oder Flüssigkeit ist und wenigstens teilweise biegsam ist, Erzeugung eines Druckunterschiedes über besagte Umhüllung (12, 14, 30, 31, 36, 39, 40), so daß der Druck im Inneren derselben niedriger ist als derjenige in der Umgebung, und Entfernung, aus der Umhüllung (12, 14, 30, 31, 36, 39, 40, 42, 43), von Flüssigkeit, die sich aus der Mischung (10) als eine Folge des Druckunterschiedes abgetrennt hat, **dadurch gekennzeichnet, daß** die Umhüllung die Mischung vollständig umschließt.

2. Verfahren nach Anspruch 1, **dadurch gekennzeichnet, daß** die Umhüllung eine Folie (12, 14) umfaßt.

3. Verfahren nach Anspruch 1 oder 2, zur in-situ-Behandlung von Erdmaterial und/oder verkipptem Material, **dadurch gekennzeichnet, daß** die Umhüllung eine Erdschicht (40, 42) umfaßt, die für Flüssigkeit undurchlässig ist.

4. Verfahren nach Anspruch 1 oder 2, zur in-situ-Behandlung von Erdmaterial und/oder verkipptem Material, **dadurch gekennzeichnet, daß** die Umhüllung eine Erdschicht (40, 42) umfaßt, die von geringer Durchlässigkeit oder undurchlässig für Flüssigkeit ist, deren Durchlässigkeit für Flüssigkeit eine Darcy-Durchlässigkeitskonstante aufweist, die zwischen k=10⁻⁶ und k=10⁻¹⁰ Metern pro Sekunde liegt.

5. Verfahren nach Anspruch 3 oder 4, **dadurch gekennzeichnet, daß** die undurchlässige Erdschicht (40, 42) erhalten wird durch Injizieren eines Bindemittels, wie etwa Wasserglas, Vergußmörtel, Wachs, Zement, Kalk, Gips, Bentonit oder Mischungen derselben.

6. Verfahren nach Anspruch 3 oder 4, **dadurch gekennzeichnet, daß** eine auf allen Seiten geschlossene Stützwand (43) in die für Flüssigkeit undurchlässige Schicht (42) eingebracht wird und daß ein Teil der innerhalb der Stützwand angeordneten Erde mit einem biegsamen Umhüllungsabschnitt (14) überdeckt wird, der mit der Stützwand (43) verbunden ist.

7. Verfahren nach Anspruch 1 oder 2, **dadurch gekennzeichnet, daß**, im Anschluß an die Entfernung von Flüssigkeit, bei Erreichen eines Flüssigkeitsprozentanteils von zwischen 30 und 85 Prozent des Volumens des restlichen Materials, wenigstens der biegsame Umhüllungsabschnitt (14) entfernt wird und das restliche Material, welches Material in Form von festen Teilchen und Flüssigkeit umfaßt, ausgehoben wird.

8. Verfahren nach Anspruch 7, **dadurch gekennzeichnet, daß** das prozentuale Volumen der flüssigen Komponente des restlichen Materials zwischen 45 und 70 % des Volumens des restlichen Materials liegt.

9. Verfahren nach einem der vorangehenden Ansprüche, **dadurch gekennzeichnet, daß** ein Absaugelement (11), das mit einer Vakuumquelle verbunden ist, in der Umhüllung angebracht wird.

10. Verfahren nach einem der vorangehenden Ansprüche, **dadurch gekennzeichnet, daß** die Außenseite der Umhüllung (12, 14, 30, 31, 36, 39, 40) mit Druckmitteln, wie etwa einer Schicht (44) aus Flüssigkeit und/oder einer Druckplatte (49), und/oder einen Gas- oder Flüssigkeitsdruck, der durch eine externe Pumpinstallation erzeugt wird, beaufschlagt wird.

11. Verfahren nach einem der vorangehenden Ansprüche, **dadurch gekennzeichnet, daß** 0,1 bis 20,0 kg Polyelektrolyt pro 1.000 kg Feststoffe zur Mischung (10) zugesetzt werden.

12. Verfahren nach Anspruch 10, **dadurch gekennzeichnet, daß** 0,2 bis 8,0 kg trockener Elektrolyt pro 1.000 kg Feststoffe zugesetzt werden.

13. Verfahren nach einem der vorangehenden Ansprüche, **dadurch gekennzeichnet, daß** die Mischung (10) von der Umhüllung umschlossen wird, die überdimensioniert ist, mit der Bildung von Falten in der Umhüllung, so daß die Umhüllung in der Lage ist, sich an Bewegungen in der Mischung anzupassen, wobei diese Bewegungen von der Entfernung von Flüssigkeit aus der Mischung herrühren.

14. Verfahren nach einem der vorangehenden Ansprüche, **dadurch gekennzeichnet, daß** ein Vakuum in der Umhüllung erzeugt wird, dessen Absolutwert im Bereich von 0,7 bis 0,2 bar liegt.

## Revendications

1. Procédé pour enlever du liquide d'un mélange (10) de matière particulaire solide et de liquide, comprenant les étapes suivantes : enfermement du mélange (10) à l'intérieur d'une enveloppe (12, 14, 30, 31, 36, 39, 40) imperméable ou peu perméable aux gaz et/ou aux liquides et au moins partiellement souple, création d'une différence de pression dans ladite enveloppe (12, 14, 30, 31, 36, 39, 40) de façon que la pression à l'intérieur de celle-ci soit inférieure à celle existant dans l'environnement, et enlèvement, de l'enveloppe (12, 14, 30, 31, 36, 39, 40, 42, 43), de liquide qui a été séparé du mélange (10) du fait de la différence de pression, **caractérisé en ce que** l'enveloppe entoure complètement le mélange.

2. Procédé selon la revendication 1, dans lequel l'enveloppe comporte une feuille (12, 14).

3. Procédé selon la revendication 1 ou 2, pour le traitement in situ de matériau de sol et/ou de matériau mis en décharge, dans lequel l'enveloppe comporte une couche de sol (40, 42) imperméable aux liquides.

4. Procédé selon la revendication 1 ou 2, pour le traitement in situ de matériau de sol et/ou de matériau mis en décharge, dans lequel l'enveloppe comporte une couche de sol (40, 42) peu perméable ou imperméable aux liquides, dont la perméabilité aux liquides a une constante de perméabilité de Darcy comprise entre k = 10⁻⁶ et k = 10⁻¹⁰ mètre/seconde.

5. Procédé selon la revendication 3 ou 4, dans lequel la couche de sol imperméable (40, 42) est obtenue en injectant un liant tel que du silicate de soude, un coulis de ciment, de la cire, du ciment, de la chaux, du gypse, de la bentonite ou des mélanges de ceux-ci.

6. Procédé selon la revendication 3 ou 4, dans lequel une paroi de retenue (43) fermée sur tous les côtés est insérée dans la couche (42) imperméable aux liquides et la partie du sol située dans la paroi de retenue est couverte d'une partie d'enveloppe souple (14) réunie à la paroi de retenue (43).

7. Procédé selon la revendication 1 ou 2, dans lequel, à la suite de l'enlèvement de liquide, au moment où est atteint un pourcentage de liquide compris entre 30 et 85 pour 100 du volume du matériau résiduel, au moins la partie d'enveloppe souple (14) est retirée et le matériau résiduel, constitué de matière sous la forme de particules solides et de liquide, est enlevé par creusement.

8. Procédé selon la revendication 7, dans lequel le pourcentage de volume du constituant liquide du matériau résiduel est de 45 à 70% du volume du matériau résiduel.

9. Procédé selon l'une quelconque des revendications précédentes, dans lequel un élément d'aspiration (11) relié à une source de vide est monté dans l'enveloppe.

10. Procédé selon l'une quelconque des revendications précédentes, dans lequel un moyen presseur tel qu'une couche (44) de liquide et/ou un plateau presseur (49) et/ou une pression de gaz ou de liquide générée par une installation de pompage extérieure sont appliqués à l'extérieur de l'enveloppe (12, 14, 30, 31, 36, 39, 40).

11. Procédé selon l'une quelconque des revendications précédentes, dans lequel 0,1 à 20,0 kg de polyélectrolyte par tonne de matière solide sont ajoutés dans le mélange (10).

12. Procédé selon la revendication 10, dans lequel 0,2 à 8,0 kg d'électrolyte sec par tonne de matière solide sont ajoutés.

13. Procédé selon l'une quelconque des revendications précédentes, dans lequel le mélange (10) est enfermé dans l'enveloppe, qui est surdimensionnée, avec formation de plis dans l'enveloppe, de façon que l'enveloppe puisse s'adapter à des mouvements dans le mélange, lesquels mouvements résultent de l'enlèvement de liquide du mélange.

14. Procédé selon l'une quelconque des revendications précédentes, dans lequel un vide est généré dans l'enveloppe, la valeur absolue de ce vide étant de 0,7 à 0,2 bar.
